# EUROPÄISCHE PATENTANMELDUNG

(11) **EP 2 998 634 A1**
(43) Veröffentlichungstag der Anmeldung: **23.03.2016**
(21) Anmeldenummer: 15182361.4
(22) Anmeldetag: 25.08.2015
(51) Int. Cl.: F16L 29/00, F16L 33/22, F16L 33/30

(54) **SCHLAUCHANSCHLUSSVORRICHTUNG**

(30) Priorität: 08.09.2014 DE 102014112906
(71) Anmelder: Puteus GmbH, 47918 Tönisvorst (DE)
(72) Erfinder: de Gruyter, Peter, 47800 Krefeld (DE)
(74) Vertreter: Manske, Jörg

(57) **Zusammenfassung**

Die Erfindung betrifft eine Schlauchanschlussvorrichtung (1) zum Anschluss mindestens eines Schlauchs, umfassend zumindest einen hohlen Anschlussabschnitt (2, 2'), der in seinem Inneren eine Fluidströmungsöffnung (20) aufweist und so dimensioniert und geformt ist, dass auf diesen von außen ein Schlauch unmittelbar aufsteckbar ist, wobei an dem Anschlussabschnitt (2) zumindest ein Dichtungselement (30, 31 , 32, 30', 31', 32') angebracht ist.

## Beschreibung

Die vorliegende Erfindung betrifft eine Schlauchanschlussvorrichtung zum Anschluss mindestens eines Schlauchs, umfassend zumindest einen hohlen Anschlussabschnitt, der in seinem Inneren eine Fluidströmungsöffnung aufweist und so dimensioniert und geformt ist, dass auf diesen von außen ein Schlauch unmittelbar aufsteckbar ist.

Schlauchanschlussvorrichtungen der eingangs genannten Art sind aus dem Stand der Technik in unterschiedlichen Ausführungsformen bereits bekannt. Bei diesen Schlauchanschlussvorrichtungen wird auf den Anschlussabschnitt von außen ein Schlauch ohne Anschlussadapter oder dergleichen unmittelbar aufgesteckt. Um den Schlauch an dem Anschlussabschnitt gegen ein unerwünschtes Lösen zu sichern und einen Fluidaustritt aus dieser Anordnung zu verhindern, kann der Anschlussabschnitt an seiner Außenseite eine Rippenstruktur aufweisen. Der Schlauch wird zusätzlich von außen mittels einer Klemmvorrichtung an dem Anschlussabschnitt gesichert.

Ein Nachteil der aus dem Stand der Technik bekannten Schlauchanschlussvorrichtungen besteht darin, dass bei diesen ein unerwünschter Fluidaustritt nicht immer zuverlässig verhindert werden kann. Weiterhin kann der Aufbau eines Vakuums nicht immer gewährleistet werden. So kann sich im Gebrauch unter Umständen die Klemmvorrichtung, die den Schlauch an dem Anschlussabschnitt sichert, ein wenig lösen, so dass die Klemmkraft verringert wird. Dieses hat zur Folge, dass der Schlauch zwar immer noch an dem Anschlussabschnitt gehalten wird, aber zumindest eine geringe Menge des Fluids zwischen einer Innenwand des Schlauchs und einer Außenwand des Anschlussabschnitts fließen kann.

Die vorliegende Erfindung macht es sich daher zur Aufgabe, eine Schlauchanschlussvorrichtung mit einer verbesserten Abdichtung zur Verfügung zu stellen.

Die Lösung dieser Aufgabe liefert eine Schlauchanschlussvorrichtung der eingangs genannten Art mit den Merkmalen des kennzeichnenden Teils des Anspruchs 1. Die Unteransprüche betreffen vorteilhafte Weiterbildungen der Erfindung.

Eine erfindungsgemäße Schlauchanschlussvorrichtung zeichnet sich dadurch aus, dass an dem Anschlussabschnitt zumindest ein Dichtungselement angebracht ist. Durch das Vorsehen zumindest eines Dichtungselements wird eine verbesserte Abdichtung geschaffen. Das mindestens eine Dichtungselement kann ferner den Aufbau eines Vakuums verbessern, Fertigungstoleranzen und -ungenauigkeiten sowohl des Anschlussabschnitts als auch des Schlauchs ausgleichen sowie Verunreinigungen des hindurchströmenden Fluids (zum Beispiel durch Klebstoff, der zur Abdichtung verwendet werden könnte) verhindern.

Um die Abdichtungswirkung weiter zu erhöhen, wird in einer bevorzugten Ausführungsform vorgeschlagen, dass an dem Anschlussabschnitt mehrere in Längsrichtung voneinander beabstandete Dichtungselemente angebracht sind.

Um die Dichtungselemente sicher an dem Anschlussabschnitt zu halten, kann in einer besonders bevorzugten Ausführungsform vorgesehen sein, dass der Anschlussabschnitt eine der Anzahl der Dichtungselemente entsprechende Anzahl ringförmiger, sich in Umfangsrichtung erstreckender Aufnahmenuten umfasst, wobei in jeder der Aufnahmenuten jeweils eines der Dichtungselemente angeordnet ist. Durch die Anordnung der Dichtungselemente in diesen zugeordneten Aufnahmenuten kann in vorteilhafter Weise ein Verrutschen der Dichtungselemente beim Aufstecken oder Entfernen des Schlauchs verhindert werden. Grundsätzlich besteht auch die Möglichkeit, dass in den Aufnahmenuten jeweils mehrere Dichtungselemente angeordnet sind.

Vorzugsweise kann der Anschlussabschnitt in Längsrichtung betrachtet eine Anzahl sich in Umfangsrichtung erstreckender, im Wesentlichen kegelstumpfartig geformter Außenwandabschnitte aufweisen, wobei vorzugsweise in jedem dieser Außenwandabschnitte mindestens eine der Aufnahmenuten ausgebildet ist. Dabei wird zwischen benachbarten kegelstumpfartig geformten Außenwandabschnitten ein Rücksprung von einem größeren Außendurchmesser hin zu einem geringeren Außendurchmesser gebildet. Dadurch kann das Aufstecken des Schlauches vereinfacht werden. Die Außenwandabschnitte weisen mit anderen Worten also eine rippenartige Strukturierung auf. Auf diese Weise wird eine reibschlüssige Vorfixierung des Schlauches an dem Anschlussabschnitt bewirkt. Grundsätzlich ist es auch möglich, dass der mindestens eine Anschlussabschnitt an seiner Außenseite keine rippenartige Strukturierung aufweist und somit glatt ausgebildet ist. An dem in dieser Weise ausgebildeten Anschlussabschnitt kann ebenfalls zumindest ein Dichtungselement angebracht werden.

In einer bevorzugten Weiterbildung der Erfindung besteht die Möglichkeit, dass die Schlauchanschlussvorrichtung einen ersten Anschlussabschnitt, der so dimensioniert und geformt ist, dass auf diesen von außen ein erster Schlauch unmittelbar aufsteckbar ist, und zumindest einen zweiten Anschlussabschnitt, der so dimensioniert und geformt ist, dass auf diesen von außen ein zweiter Schlauch unmittelbar aufsteckbar ist, aufweist, wobei an jedem der Anschlussabschnitte zumindest ein Dichtungselement angebracht ist. Dadurch wird die Möglichkeit geschaffen, mindestens zwei Schläuche miteinander zu verbinden. Auf jeden der beiden Anschlussabschnitte wird bei der Montage jeweils ein Schlauch aufgesteckt und mit Hilfe mindestens einer Klemmvorrichtung gesichert. Dadurch, dass an jedem der Anschlussabschnitte zumindest ein Dichtungselement angebracht ist, wird die Anordnung in diesem Bereich zusätzlich abgedichtet.

Um die Abdichtung der Anordnung nach der Anbringung der Schläuche weiter zu verbessern, wird in einer bevorzugten Ausführungsform vorgeschlagen, dass an den Anschlussabschnitten mehrere, in Längsrichtung voneinander beabstandete Dichtungselemente angebracht sind.

Für einen sicheren Halt der Dichtungselemente hat es sich als zweckmäßig erwiesen, dass jeder Anschlussabschnitt eine der Anzahl der Dichtungselemente entsprechende Anzahl ringförmiger, sich in Umfangsrichtung erstreckender Aufnahmenuten umfasst, wobei in jeder der Aufnahmenuten jeweils eines der Dichtungselemente angeordnet ist. Dadurch wird erreicht, dass ein unerwünschtes Verrutschen der Dichtungselemente beim Aufstecken oder Entfernen der Schläuche verhindert werden kann. Prinzipiell besteht auch die Möglichkeit, dass in den Aufnahmenuten jeweils mehrere Dichtungselemente angeordnet sind.

Vorzugsweise kann zumindest einer der Anschlussabschnitte in Längsrichtung betrachtet eine Anzahl sich in Umfangsrichtung erstreckender, im Wesentlichen kegelstumpfartig geformter Außenwandabschnitte aufweisen, wobei vorzugsweise in jedem dieser Außenwandabschnitte mindestens eine der Aufnahmenuten ausgebildet ist. Vorteilhaft können alle Anschlussabschnitte der Schlauchanschlussvorrichtung in dieser Weise ausgebildet sein. Zwischen benachbarten kegelstumpfartig geformten Außenwandabschnitten wird ein Rücksprung von einem größeren Außendurchmesser zu einem geringeren Außendurchmesser gebildet, so dass das Aufstecken des Schlauches beziehungsweise der Schläuche vereinfacht wird und in den Bereichen mit größerem Außendurchmesser, in denen die Anschlussabschnitte rippenartig ausgebildet sind, eine reibschlüssige Vorfixierung ermöglicht wird. Grundsätzlich ist es auch möglich, dass die Anschlussabschnitte an ihren Außenseiten keine rippenartige Strukturierung aufweisen und somit glatt ausgebildet sind. An den in dieser Weise ausgebildeten Anschlussabschnitten kann ebenfalls zumindest ein Dichtungselement angebracht werden.

Die Dichtungselemente können vorteilhaft als Dichtungsringe ausgebildet sein, die vorzugsweise aus einem gummielastischen Werkstoff hergestellt sind. Die Dichtungsringe können auch aus einem Werkstoff hergestellt sein, der keine gummielastischen Eigenschaften aufweist (zum Beispiel PTFE).

Um die Strömungsverbindung zwischen den Anschlussabschnitten selektiv öffnen und verschließen zu können, wird in einer bevorzugten Ausführungsform vorgeschlagen, dass zwischen den Anschlussabschnitten ein Absperrorgan angeordnet ist. Die Anschlussabschnitte können vorteilhaft durch abgedichtete Schraubverbindungen mit dem Absperrorgan verbunden sein. Vorzugsweise kann das Absperrorgan ein Kugelhahn sein. Dieser zeichnet sich insbesondere durch einen robusten mechanischen Aufbau aus. Er hat weiterhin einen geringen Strömungswiderstand und lässt sich schnell öffnen und schließen.

In einer weiteren vorteilhaften Ausführungsform besteht die Möglichkeit, dass die Schlauchanschlussvorrichtung integral mit einem Ventil, insbesondere einem Auslaufventil oder einem Absperrventil, ausgebildet ist oder zumindest ein Verbindungsmittel umfasst, mittels dessen sie mit einem Ventil, insbesondere einem Auslaufventil, verbindbar ist.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: einen Längsschnitt durch einen Teil einer Schlauchanschlussvorrichtung, die gemäß einem ersten Ausführungsbeispiel der vorliegenden Erfindung ausgeführt ist,
- Fig. 2: eine Seitenansicht einer Schlauchanschlussvorrichtung, die gemäß einem zweiten Ausführungsbeispiel der vorliegenden Erfindung ausgeführt ist,
- Fig. 3: eine perspektivische Ansicht der Schlauchanschlussvorrichtung gemäß Fig. 2.

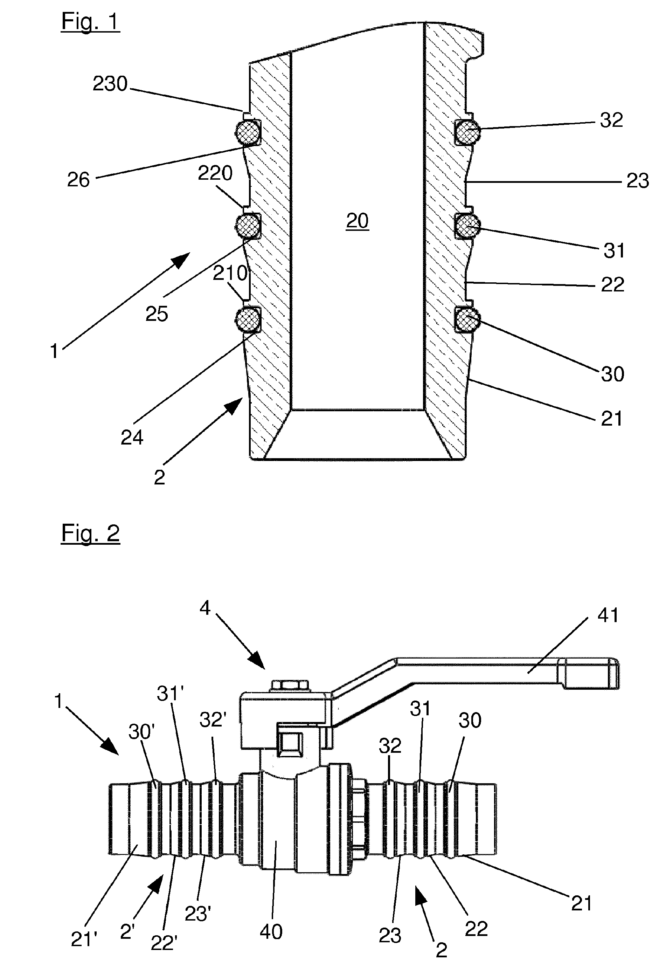

Unter Bezugnahme auf Fig. 1 umfasst eine Schlauchanschlussvorrichtung 1, die zum Anschluss mindestens eines Schlauchs ausgebildet ist, zumindest einen hohlen Anschlussabschnitt 2, der in seinem Inneren eine Fluidströmungsöffnung 20 aufweist, durch die ein Fluid, insbesondere Wasser, strömen kann. Dieser Anschlussabschnitt 2 ist so dimensioniert und geformt, dass auf diesen von außen ein Schlauch ohne Anschlussadapter oder dergleichen unmittelbar aufgesteckt werden kann. Der Anschlussabschnitt 2 weist in an sich bekannter Weise in Längsrichtung betrachtet drei sich in Umfangsrichtung erstreckende und im Wesentlichen kegelstumpfartig geformte Außenwandabschnitte 21, 22, 23 auf. An einem in Längsrichtung betrachtet hinteren Ende eines jeden Außenwandabschnitts 21, 22, 23 ist jeweils ein Rücksprung 210, 220, 230 von einem größeren Außendurchmesser zu einem kleineren Außendurchmesser ausgebildet. Die Außenwandabschnitte 21, 22, 23 weisen mit anderen Worten also eine rippenartige Strukturierung auf. Die kegelstumpfartige Form der Außenwandabschnitte 21, 22, 23 erleichtert insbesondere das Aufstecken eines Schlauchs auf den Anschlussabschnitt 2. Die Rücksprünge 210, 220, 230 bewirken, dass der auf den Anschlussabschnitt 2 aufgesteckte Schlauch in an diese angrenzenden Bereichen der Außenwandabschnitte 21, 22, 23 mit größerem Außendurchmesser durch Reibschluss gehalten und dadurch vorfixiert werden kann. Um den Schlauch an dem Anschlussabschnitt 2 zu sichern und diese Anordnung abzudichten, wird der Schlauch zusätzlich von außen mittels einer Klemmvorrichtung gesichert. Die Klemmvorrichtung kann zum Beispiel eine Schlauchschelle sein oder Klemmschalen oder dergleichen Klemmmittel aufweisen.

Um die Abdichtung der Anordnung nach dem Aufstecken und Befestigen des Schlauchs mittels der Klemmvorrichtung zu verbessern, weist der Anschlussabschnitt 2 drei in Längsrichtung voneinander beabstandete, ringförmig ausgebildete Dichtungselemente 30, 31, 32 auf, die vorzugsweise aus einem gummielastischen Werkstoff hergestellt sind. Die Dichtungselemente 30, 31, 32 können alternativ auch aus einem Werkstoff hergestellt sein, der keine gummielastischen Eigenschaften aufweist (zum Beispiel PTFE). Der Anschlussabschnitt 2 weist ferner drei ringförmige, sich in Umfangsrichtung erstreckende Aufnahmenuten 24, 25, 26 auf, die zum Beispiel durch spanenden Materialabtrag, insbesondere durch Eindrehen in die Außenwandabschnitte 21, 22, 23, hergestellt werden können. In jeder der Aufnahmenuten 24, 25, 26 ist jeweils eines der Dichtungselemente 30, 31, 32 angeordnet. Durch das Vorsehen der Dichtungselemente 30, 31, 32 wird in vorteilhafter Weise nach dem Aufstecken des Schlauchs eine zusätzliche Art der Abdichtung der Anordnung geschaffen, so dass ein verbesserter Schutz gegen Undichtigkeiten gegeben ist. Die Anordnung der Dichtungselemente 30, 31, 32 in den Aufnahmenuten 24, 25, 26 kann in vorteilhafter Weise ein Verrutschen der Dichtungselemente 30, 31, 32 beim Aufstecken des Schlauchs auf den Anschlussabschnitt 2 verhindern. Grundsätzlich besteht auch die Möglichkeit, dass in den Aufnahmenuten 24, 25, 26 jeweils mehrere Dichtungselemente 30, 31, 32 angeordnet sind.

Die Schlauchanschlussvorrichtung 1 kann zum Beispiel integral mit einem hier nicht explizit dargestellten Ventil, insbesondere einem Auslaufventil, ausgebildet sein. Es besteht auch die Möglichkeit, dass die Schlauchanschlussvorrichtung 1 mindestens ein Verbindungsmittel umfasst, das so ausgebildet ist, dass die Schlauchanschlussvorrichtung 1 mit einem derartigen Ventil lösbar verbunden werden kann. Das Verbindungsmittel kann zum Beispiel ein Schraubverbindungsmittel sein.

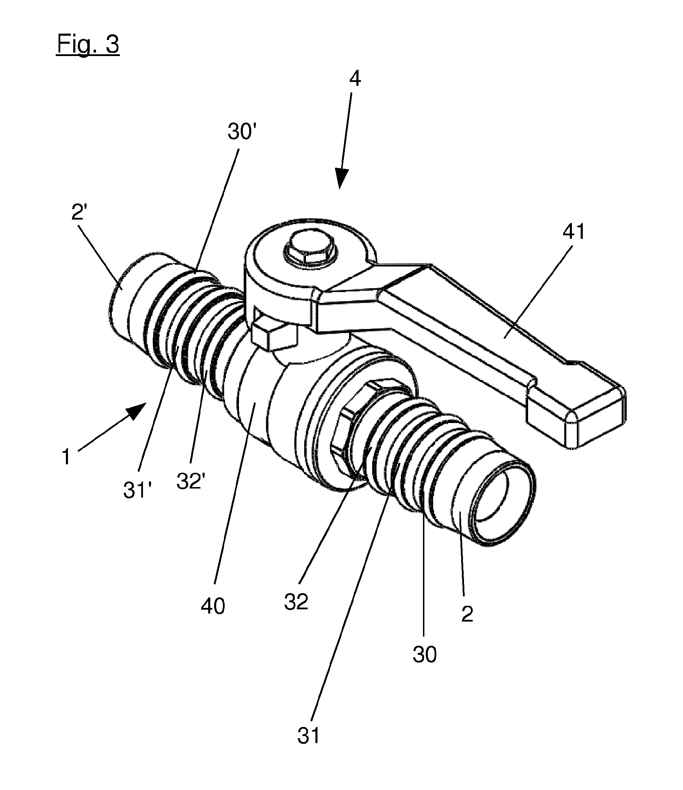

Unter Bezugnahme auf Fig. 2 und 3 soll nachfolgend eine Schlauchanschlussvorrichtung 1 näher erläutert werden, die gemäß einem zweiten Ausführungsbeispiel der vorliegenden Erfindung ausgeführt ist. Diese Schlauchanschlussvorrichtung 1 ist so ausgebildet, dass an einander gegenüberliegenden Enden jeweils ein Schlauch angeschlossen werden kann. Mittels dieser Schlauchanschlussvorrichtung 1 können mit anderen Worten also mindestens zwei Schläuche miteinander verbunden werden.

Die Schlauchanschlussvorrichtung 1 weist einen ersten Anschlussabschnitt 2 und einen zweiten Anschlussabschnitt 2' auf, die beide wiederum hohl ausgebildet sind und in ihrem Inneren jeweils eine Fluidströmungsöffnung aufweisen, durch die ein Fluid hindurchströmen kann. Die beiden Anschlussabschnitte 2, 2' sind so ausgebildet, dass auf diese von außen jeweils ein Schlauch ohne zusätzlichen Anschlussadapter oder dergleichen unmittelbar aufgesteckt werden kann. Jeder der beiden Anschlussabschnitte 2, 2' weist in diesem Ausführungsbeispiel drei sich in Umfangsrichtung erstreckende, im Wesentlichen kegelstumpfartig geformte Außenwandabschnitte 21, 22, 23, 21', 22', 23' auf. An einem in Längsrichtung betrachtet hinteren Ende eines jeden Außenwandabschnitts 21, 22, 23, 21', 22', 23' ist - analog zu der Schlauchanschlussvorrichtung 1 gemäß dem ersten Ausführungsbeispiel - jeweils ein Rücksprung von einem größeren Außendurchmesser zu einem kleineren Außendurchmesser ausgebildet. Wie oben bereits erläutert, wird durch die kegelstumpfartige Ausgestaltung der Außenwandabschnitte 21, 22, 23, 21', 22', 23' das Aufstecken der Schläuche auf die Anschlussabschnitte 2, 2' vereinfacht. Durch die Rücksprünge wird eine rippenartige Strukturierung der Anschlussabschnitte 2, 2 erhalten, die bewirkt, dass die auf die jeweiligen Anschlussabschnitte 2, 2' aufgesteckten Schläuche in an diese angrenzenden Bereichen der Außenwandabschnitte 21, 22, 23, 21', 22', 23' mit größerem Außendurchmesser durch eine reibschlüssige Verbindung gehalten und dadurch vorfixiert werden können. Um die Schläuche an dem jeweiligen Anschlussabschnitt 2, 2' zu sichern und abzudichten, werden sie wiederum zusätzlich von außen mit Hilfe jeweils einer Klemmvorrichtung gesichert. Die Klemmvorrichtungen können zum Beispiel Schlauchschellen sein oder Klemmschalen oder dergleichen Klemmmittel aufweisen.

Um die Abdichtung der Anordnung nach dem Aufstecken und Befestigen der Schläuche zu verbessern, weist jeder der beiden Anschlussabschnitte 2, 2' drei in Längsrichtung voneinander beabstandete, ringförmig ausgebildete Dichtungselemente 30, 31, 32, 30', 31', 32' auf, die insbesondere aus einem gummielastischen Werkstoff hergestellt sind. Die Dichtungselemente 30, 31, 32, 30', 31', 32' können alternativ auch aus einem Werkstoff hergestellt sein, der keine gummielastischen Eigenschaften aufweist (zum Beispiel PTFE). Jeder der beiden Anschlussabschnitte 2, 2' weist in Längsrichtung gesehen drei ringförmige, sich in Umfangsrichtung erstreckende Aufnahmenuten auf, die zum Beispiel durch spanenden Materialabtrag, insbesondere durch Eindrehen in die Außenwandabschnitte 21, 22, 23, 21', 22', 23' hergestellt werden können. In jeder der Aufnahmenuten ist jeweils eines der Dichtungselemente 30, 31, 32, 30', 31', 32' angeordnet. Durch das Vorsehen der Dichtungselemente 30, 31, 32, 30', 31', 32' wird nach dem Aufstecken der Schläuche in vorteilhafter Weise eine zusätzliche Abdichtung der Anordnung geschaffen, so dass ein verbesserter Schutz gegen Undichtigkeiten erreicht werden kann. Prinzipiell besteht auch die Möglichkeit, dass in den Aufnahmenuten jeweils mehrere Dichtungselemente 30, 31, 32, 30', 31', 32' angeordnet sind.

Zwischen den beiden Anschlussabschnitten 2, 2' ist in diesem Ausführungsbeispiel ein Absperrorgan 4 vorgesehen, das so ausgebildet ist, dass eine Strömungsverbindung zwischen den beiden Anschlussabschnitten 2, 2' von einem Benutzer selektiv geöffnet beziehungsweise geschlossen werden kann. Die beiden Anschlussabschnitte 2, 2' sind jeweils durch eine abgedichtete Schraubverbindung mit einem Grundkörper 40 des Absperrorgans 4 verbunden. Das Absperrorgan 4, das vorliegend als so genannter Kugelhahn ausgebildet ist, weist einen drehbeweglichen Handhabungsgriff 41 auf, durch dessen Betätigung die Strömungsverbindung zwischen den beiden Anschlussabschnitten 2, 2' wahlweise geöffnet beziehungsweise geschlossen werden kann.

Gemäß einem weiteren, hier nicht explizit dargestellten Ausführungsbeispiel kann die Schlauchanschlussvorrichtung 1 gemäß Fig. 2 und 3 auch ohne das Absperrorgan 4 ausgebildet sein. Die Schlauchanschlussvorrichtung 1 ist dann funktional eine reine Schlauchverbindungsvorrichtung ohne die Möglichkeit, die Strömungsverbindung zwischen den daran angeschlossenen Schläuchen mittels des Absperrorgans 4 unterbrechen zu können.

Die Schlauchanschlussvorrichtung 1 kann - mit oder ohne Absperrorgan 4 - auch so ausgebildet sein, dass sie mehr als zwei Anschlussabschnitte 2, 2' der oben erläuterten Art aufweist, an denen jeweils ein Schlauch befestigt werden kann.

In alternativen Varianten der hier erläuterten Ausführungsbeispiele besteht auch die Möglichkeit, dass die Anschlussabschnitten 2, 2' an ihren Außenseiten keine rippenartigen Strukturierungen aufweisen und somit glatt ausgeführt sind. An den in dieser Weise ausgebildeten Anschlussabschnitten 2, 2' ist jeweils mindestens ein Dichtungselement 30, 31, 32, 30', 31', 32' angebracht.

Die an den Anschlussabschnitten 2, 2' angebrachten Dichtungselemente 30, 31, 32, 30', 31', 32' können bei sämtlichen hier erläuterten Ausführungsbeispielen nicht nur die Abdichtung verbessern, sondern darüber hinaus auch den Aufbau eines Vakuums verbessern, Fertigungstoleranzen und -ungenauigkeiten sowohl der Anschlussabschnitte 2, 2' als auch der daran angebrachten Schläuche ausgleichen sowie Verunreinigungen des hindurchströmenden Fluids (zum Beispiel durch Klebstoff, der zur Abdichtung verwendet werden könnte) verhindern.

## Patentansprüche

1. Schlauchanschlussvorrichtung (1) zum Anschluss mindestens eines Schlauchs, umfassend zumindest einen hohlen Anschlussabschnitt (2, 2'), der in seinem Inneren eine Fluidströmungsöffnung (20) aufweist und so dimensioniert und geformt ist, dass auf diesen von außen ein Schlauch unmittelbar aufsteckbar ist, **dadurch gekennzeichnet, dass** an dem Anschlussabschnitt (2) zumindest ein Dichtungselement (30, 31, 32, 30', 31', 32') angebracht ist.

2. Schlauchanschlussvorrichtung (1) nach Anspruch 1, **dadurch gekennzeichnet, dass** an dem Anschlussabschnitt (2, 2') mehrere in Längsrichtung voneinander beabstandete Dichtungselemente (30, 31, 32, 30', 31', 32') angebracht sind.

3. Schlauchanschlussvorrichtung (1) nach Anspruch 1 oder 2, **dadurch gekennzeichnet, dass** der Anschlussabschnitt (2, 2') eine der Anzahl der Dichtungselemente (30, 31, 32, 30', 31', 32') entsprechende Anzahl ringförmiger, sich in Umfangsrichtung erstreckender Aufnahmenuten (24, 25, 26) umfasst, wobei in jeder der Aufnahmenuten (24, 25, 26) jeweils eines der Dichtungselemente (30, 31, 32, 30', 31', 32') angeordnet ist.

4. Schlauchanschlussvorrichtung (1) nach Anspruch 3, **dadurch gekennzeichnet, dass** der Anschlussabschnitt (2, 2') in Längsrichtung betrachtet eine Anzahl sich in Umfangsrichtung erstreckender, im Wesentlichen kegelstumpfartig geformter Außenwandabschnitte (21, 22, 23, 21', 22', 23') aufweist, wobei vorzugsweise in jedem dieser Außenwandabschnitte (21, 22, 23, 21', 22', 23') mindestens eine der Aufnahmenuten (24, 25, 26) ausgebildet ist.

5. Schlauchanschlussvorrichtung (1) nach Anspruch 1, **dadurch gekennzeichnet, dass** die Schlauchanschlussvorrichtung (1) einen ersten Anschlussabschnitt (2), der so dimensioniert und geformt ist, dass auf diesen von außen ein erster Schlauch unmittelbar aufsteckbar ist, und zumindest einen zweiten Anschlussabschnitt (2'), der so dimensioniert und geformt ist, dass auf diesen von außen ein zweiter Schlauch unmittelbar aufsteckbar ist, aufweist, wobei an jedem der Anschlussabschnitte (2, 2') zumindest ein Dichtungselement (30, 31, 32, 30', 31', 32') angebracht ist.

6. Schlauchanschlussvorrichtung (1) nach Anspruch 5, **dadurch gekennzeichnet, dass** an den Anschlussabschnitten (2, 2') mehrere in Längsrichtung voneinander beabstandete Dichtungselemente (30, 31, 32, 30', 31', 32') angebracht sind.

7. Schlauchanschlussvorrichtung (1) nach einem der Ansprüche 5 oder 6, **dadurch gekennzeichnet, dass** jeder Anschlussabschnitt (2, 2') eine der Anzahl der Dichtungselemente (30, 31, 32, 30', 31', 32') entsprechende Anzahl ringförmiger, sich in Umfangsrichtung erstreckender Aufnahmenuten (24, 25, 26) umfasst, wobei in jeder der Aufnahmenuten (24, 25, 26) jeweils eines der Dichtungselemente (30, 31, 32, 30', 31', 32') angeordnet ist.

8. Schlauchanschlussvorrichtung (1) nach Anspruch 7, **dadurch gekennzeichnet, dass** zumindest einer der Anschlussabschnitte (2, 2') in Längsrichtung betrachtet eine Anzahl sich in Umfangsrichtung erstreckender, im Wesentlichen kegelstumpfartig geformter Außenwandabschnitte (21, 22, 23, 21', 22', 23') aufweist, wobei vorzugsweise in jedem dieser Außenwandabschnitte (21, 22, 23, 21', 22', 23') mindestens eine der Aufnahmenuten (24, 25, 26) ausgebildet ist.

9. Schlauchanschlussvorrichtung (1) nach einem der Ansprüche 1 bis 8, **dadurch gekennzeichnet, dass** die Dichtungselemente (30, 31, 32, 30', 31', 32') als Dichtungsringe ausgebildet sind, die vorzugsweise aus einem gummielastischen Werkstoff hergestellt sind.

10. Schlauchanschlussvorrichtung (1) nach einem der Ansprüche 1 bis 9, **dadurch gekennzeichnet, dass** zwischen den Anschlussabschnitten (2, 2') ein Absperrorgan (4), insbesondere ein Kugelhahn, angeordnet ist.

11. Schlauchanschlussvorrichtung (1) nach einem der Ansprüche 1 bis 10, **dadurch gekennzeichnet, dass** die Schlauchanschlussvorrichtung (1) integral mit einem Ventil, insbesondere einem Auslaufventil, ausgebildet ist oder zumindest ein Verbindungsmittel umfasst, mittels dessen sie mit einem Ventil, insbesondere einem Auslaufventil oder einem Absperrventil, verbindbar ist.
